# EUROPEAN PATENT APPLICATION

(11) **EP 4 209 143 A1**
(43) Date of publication of application: **12.07.2023**
(21) Application number: 22020022.4
(22) Date of filing: 27.01.2022
(51) Int. Cl.: A42B 3/04, B60Q 1/26, G01C 21/36, G01C 21/34

(54) **METHOD AND SYSTEM FOR DISPLAYING INDICATIONS FOR TWO-WHEELED VEHICLES**

(30) Priority: 07.01.2022 US 202217647389
(71) Applicant: Reby Inc., Walnut, CA 91789 (US)
(72) Inventor: Alarcón Cot, Eduard, 08174 Sant Cugat del Valles, Barcelona (ES); Ferrer Rizo, Álvaro, 28003 Madrid (ES); Llagostera Saltor, Eugeni, 08034 Barcelona (ES); Gómez Torres, Josep, London, SW5 0AQ (GB)
(74) Representative: Ivanov, Ivan Nikolov

(57) **Abstract**

A method and system for displaying indications for two-wheeled vehicles is disclosed herein. The system comprises a scooter processing unit. A rider profile database is stored at a memory coupled to the scooter processing unit. A route prediction unit is configured to predict a route of the two-wheeled vehicle based on the rider profile. A scooter motion tracking unit is configured to receive a set of sensing input parameters from at least one sensor mounted aboard the two-wheeled vehicle and a Control interface (CI), and for detecting a start instance and an end instance of a manoeuvre being performed by the two-wheeled vehicle. An indication control unit, communicatively coupled to the scooter motion tracking unit, is configured to receive a trigger signal corresponding to the start instance, and an end signal corresponding to the end instance for controlling the operation of an LED indicator.

## Description

### FIELD OF THE INVENTION

The present disclosure generally relates to two-wheeled vehicles, and particularly, but not limitedly, to a method and system for displaying indications for two-wheeled vehicles.

### BACKGROUND

As a mode of transport, two-wheeled vehicles are considered an excellent alternative to the use of cars due to the low finances involved in the purchase and maintenance costs thereof. In many countries, two-wheeled vehicles are the primary mode of transport. One of the main reasons for this is two-wheeled vehicles are easier to handle and navigate through a traffic jam situation.

However, with the various advantages that these vehicles offer are accompanied by a few other disadvantageous aspects. For example, two-wheeled vehicles are lot less safe as compared to a car. Unlike in cars, even smallest accidents can be accompanied by grave injuries when it comes to two-wheeled vehicles. Many a times, such accidents may be a direct result of lack of use of indicators while turning the two wheeled vehicle, wherein the rider of the two-wheeled vehicle may have accidentally forgotten to use the indicator. Another disadvantageous aspect associated with the kick style two wheeled vehicles is that generally their rear indicators are installed on the vehicle body at the bottom and closer to the ground, which in turn makes it difficult for the following cars to view the indicators.

As such, there is felt a need of an indication system that makes it safer to use two-wheeled vehicles. To this end, the present disclosure describes a method and system for displaying indications for two-wheeled vehicles.

### SUMMARY

Embodiments and technical aspects disclosed herein relate to a method and system for displaying indications for two-wheeled vehicles.

The present subject matter envisages a system for displaying indications for two-wheeled vehicles. The system comprises a scooter processing unit. The system further comprises a rider profile database to store one or more rider profiles at a memory coupled to the scooter processing unit. The system further comprises a route prediction unit configured to predict a route of the two-wheeled vehicle based on the rider profile. The route prediction unit includes a route prediction machine learning module configured to store instances associated with the one or more rider profiles based on a set of trip parameters as rider profile training data. The system further comprises a scooter motion tracking unit configured to receive a set of sensing input parameters from at least one sensor mounted aboard the two-wheeled vehicle and a Control interface (CI), and detecting a start instance and an end instance of a manoeuvre being performed by the two-wheeled vehicle. The scooter motion tracking unit includes a scooter manoeuvre detection machine learning module configured to detect and store the start instance and the end instance of the manoeuvres as manoeuvre detection training data. The system further comprises an indication control unit, communicatively coupled to the scooter motion tracking unit, configured to receive a trigger signal corresponding to the start instance, and an end signal corresponding to the end instance for controlling the operation of an LED indicator.

In a non-limiting alternative embodiment, the set of sensing input parameters include input signal transmissions of input information associated with the CI, and the at least one sensor, wherein the at least one sensor includes a GPS module, at least one IMU sensor mounted aboard the two-wheeled vehicle, and a brake control unit aboard the two-wheeled vehicle.

In a non-limiting alternative embodiment, the set of trip parameters include information associated with day, time-period, and route taken for all trips conducted by a rider of the two-wheeled vehicle.

In a non-limiting alternative embodiment, the manoeuvre includes braking of the two-wheeled vehicle and turning of the two-wheeled vehicle.

In a non-limiting alternative embodiment, the LED indicator is located on at least one of on-board the two-wheeled vehicle, a helmet of the rider, a wearable apparel of the rider, and an accessory of the rider visible to oncoming and surrounding vehicle users.

In a non-limiting alternative embodiment, the control interface (CI) is configured to allow the rider to manually provide information associated with a trip route to the scooter motion tracking unit. The CI may also be configured to allow the rider to manually provide or manually cancel the trigger signal and end signal to the indication control unit.

The present subject matter also envisages a method for displaying indications for two-wheeled vehicles. The method comprising storing one or more rider profiles at a memory coupled to a scooter processing unit; predicting, via a route prediction unit, a route of the two-wheeled vehicle based on the rider profile; receiving, at a scooter motion tracking unit, a set of sensing input parameters from at least one sensor mounted aboard the two-wheeled vehicle and a Control interface (CI); detecting, via the scooter motion tracking unit, a start instance and an end instance of a manoeuvre being performed by the two-wheeled vehicle; and receiving, from the scooter motion tracking unit at an indication control unit, a trigger signal corresponding to the start instance, and an end signal corresponding to the end instance for controlling the operation of an LED indicator.

In a non-limiting alternative embodiment, the method further comprises storing, via a route prediction machine learning module, instances associated with the one or more rider profiles based on a set of trip parameters.

In a non-limiting alternative embodiment, the method further comprises storing, via a scooter manoeuvre detection machine learning module, the start instance and the end instance of the manoeuvres.

In a non-limiting alternative embodiment, the method further comprises allowing, via the CI, the rider to manually provide information associated with a trip route to the scooter motion tracking unit; and allowing, via the CI, the rider to manually provide or manually cancel the trigger signal and end signal to the indication control unit.

In a non-limiting alternative embodiment, the method further comprises initiating tracking of the at least one sensor subsequent to a detection of an upcoming turn in the predicted route.

In a non-limiting alternative embodiment, the method further comprises controlling intensity of the LED indicators based on ambient light conditions.

### BRIEF DESCRIPTION OF DRAWINGS

A better understanding of embodiments of the present disclosure (including alternatives and/or variations thereof) may be obtained with reference to the detailed description of the embodiments along with the following drawings, in which:
FIG. 1 illustrates a schematic block diagram of a system for displaying indications for two-wheeled vehicles, in accordance with an embodiment of the present subject matter.
FIG. 2 illustrates a schematic block diagram depicting route prediction, in accordance with an embodiment of the present subject matter.
FIG. 3 illustrates a schematic block diagram depicting a method for displaying indications for two-wheeled vehicles, in accordance with an embodiment of the present subject matter.
FIG. 4A and FIG. 4B illustrate a schematic block diagram depicting an exemplary implementation for displaying indications for two-wheeled vehicles, in accordance with an embodiment of the present subject matter.
FIG. 5 and FIG. 6 depict schematic diagrams of a helmet including an LED indicator used in the system for displaying indications for two-wheeled vehicles, in accordance with an embodiment of the present subject matter.

### DETAILED DESCRIPTION

The embodiments will now be described more fully hereinafter with reference to the accompanying figures, in which preferred embodiments are shown. The foregoing may, however, be embodied in many different forms and should not be construed as limited to the illustrated embodiments set forth herein. Rather, these illustrated embodiments are provided so that this disclosure will convey the scope to those skilled in the art.

All documents mentioned herein are hereby incorporated by reference in their entirety. References to items in the singular should be understood to include items in the plural, and vice versa, unless explicitly stated otherwise or clear from the text. Grammatical conjunctions are intended to express any and all disjunctive and conjunctive combinations of conjoined clauses, sentences, words, and the like, unless otherwise stated or clear from the context. Thus, the term "or" should generally be understood to mean "and/or" and so forth.

Recitation of ranges of values herein are not intended to be limiting, referring instead individually to any and all values falling within the range, unless otherwise indicated herein, and each separate value within such a range is incorporated into the specification as if it were individually recited herein. The words "about," "approximately," or the like, when accompanying a numerical value, are to be construed as indicating a deviation as would be appreciated by one of ordinary skill in the art to operate satisfactorily for an intended purpose. Ranges of values and/or numeric values are provided herein as examples only, and do not constitute a limitation on the scope of the described embodiments. The use of any and all examples, or exemplary language ("e.g.," "such as," or the like) provided herein, is intended merely to better illuminate the embodiments and does not pose a limitation on the scope of the embodiments. No language in the specification should be construed as indicating any unclaimed element as essential to the practice of the embodiments.

In the following description, it is understood that terms such as "first," "second," "above," "below," and the like, are words of convenience and are not to be construed as limiting terms unless expressly state otherwise.

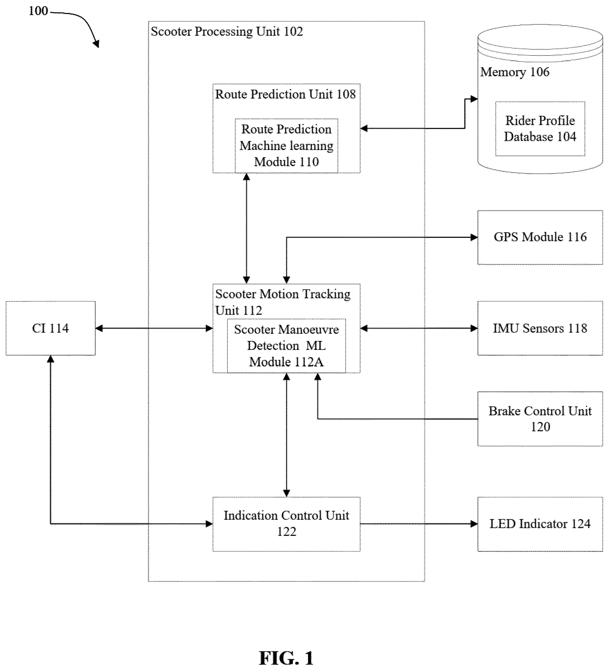

FIG. 1 illustrates a schematic block diagram of a system for displaying indications for two-wheeled vehicles 100 (hereinafter referred to as system 100), in accordance with an embodiment of the present subject matter. The system 100, in accordance with an embodiment of the present subject matter, is configured for facilitating automatic activation of indication means by detecting and analysing different ride parameters associated with the two-wheeled vehicle. The system 100 also includes a feature to allow the user to manually override accidental activation of the indication means. The system 100 is hereinafter described with reference to FIG. 1.

The system 100 comprises a scooter processing unit 102. The scooter processing unit 102, in accordance with an embodiment of the present subject matter, may be an electronic control unit of the two-wheeled vehicle. In one embodiment, the two-wheeled vehicle may be an electric scooter or an IC engine powered scooter. The system 100 further comprises a rider profile database 104 to store one or more rider profiles at a memory 106 coupled to the scooter processing unit 102. The rider profile may include information associated with the rider himself, including the name and picture of the rider, the usual trip times of the rider, the usual locations that the rider visits during the aforementioned trip times, and so on. The rider profile database 104 may also include more than one rider profiles. Known image recognition techniques may be used to identify the rider using the two-wheeled vehicle via an image capturing and processing unit provided on-board the two-wheeled vehicle.

The system 100 further comprises a route prediction unit 108 configured to predict a route of the two-wheeled vehicle based on the rider profile. The route can be predicted by the route prediction unit 108 by monitoring the day, time, and by identifying the rider. More specifically, the route prediction unit 108 includes a route prediction machine learning module 108A configured to store instances associated with the one or more rider profiles based on a set of trip parameters. In one embodiment, the set of trip parameters include information associated with day, time-period, and route taken for all trips conducted by the rider of the two-wheeled vehicle. Therefore, the route prediction unit 108, with its machine learning capabilities, is equipped with the information of the usual route taken by the rider on any particular day and time. This allows the route prediction unit 108 to predict the route being taken by the rider for a particular trip.

For example, if the user is a devout Christian, any trip taken on a Sunday morning may trigger the route prediction unit 108 to predict the route to the rider's usual church, as this information is already present in the route prediction unit 108 and compiled by the route prediction machine learning module 108A. Similarly, in another example, the route prediction unit 108 may predict the route to the user's office on weekday mornings.

The system 100 further comprises a scooter motion tracking unit 112 configured to receive a set of sensing input parameters from at least one sensor mounted aboard the two-wheeled vehicle and a Control interface (CI) 114. The scooter motion tracking unit 112 is further configured for detecting a start instance and an end instance of a manoeuvre being performed by the two-wheeled vehicle based on the inputs received from the at least one sensor and the CI 114. In a non-limiting alternative embodiment, the set of sensing input parameters include input signal transmissions of input information associated with the CI 114, and the at least one sensor, wherein the at least one sensor includes a GPS module 116, at least one IMU sensor 118 mounted aboard the two-wheeled vehicle, and a brake control unit 120 aboard the two-wheeled vehicle.

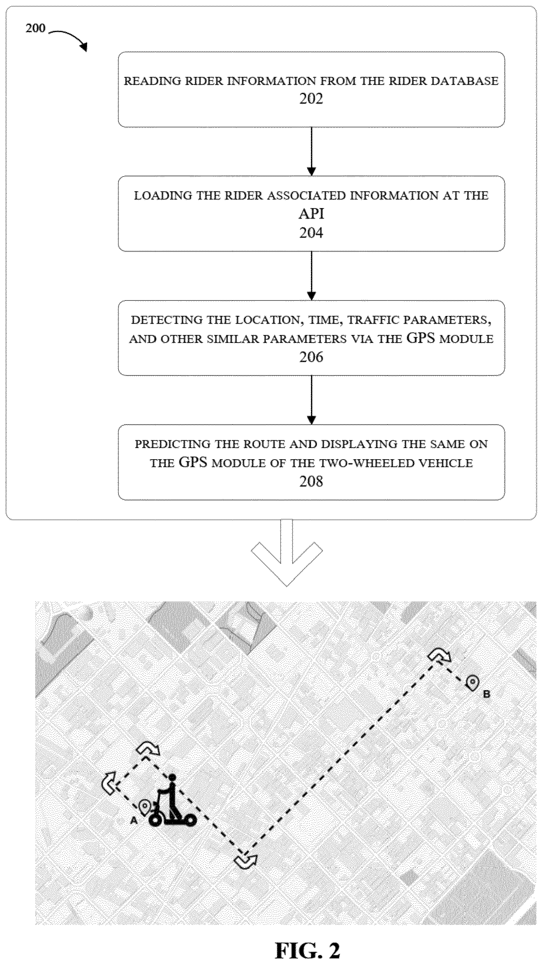

FIG. 2 illustrates a schematic block diagram depicting route prediction process 200, in accordance with an embodiment of the present subject matter. At block 202, the process 200 comprises reading rider information from the rider database. More specifically, at this step, the rider is identified for fetching the information associated with the rider's usual trip routes.

At block 204, the process 200 comprises loading the rider associated information at the CI 114. The CI 114 is the rider's interface with the two-wheeled vehicle, and as such, allows the user to interact with the two-wheeled vehicle. Therefore, if the wrong rider profile is presented to the rider at the CI 114, the rider may have an option to rectify the rider profile selection.

At block 206, the process 200 comprises detecting the location, time, traffic parameters, and other similar parameters via the GPS module 116. The route prediction unit 108 is configured to predict a route, wherein the prediction is based on the aforementioned parameters as well as other information associated with the usual trips of the rider, as per the rider profile database.

At block 208, the process 200 comprises predicting the route via the GPS module 116 of the two-wheeled vehicle. In an embodiment, the GPS module 116 may include a display or a voice interface for presenting or conveying the predicted route to the rider.

Referring back to FIG. 1, in one embodiment, the destination location is fed to the scooter motion tracking unit 112 via the CI 114. In such a scenario, the predicted route information is taken via the CI 114 and not the route prediction unit 108. It is to be noted whether the predicted route information is taken from the route prediction unit 108 or the CI 114, the predicted route information is displayed to the rider, in accordance with one embodiment. In one embodiment, the CI 114 may be an application configured on a smart device of the rider. The smart device having the CI 114 may be communicatively coupled to the scooter motion tracking unit 112 via wireless coupling protocols such as Bluetooth, Wi-Fi, and internet. In yet another embodiment, the smart device having the CI 114 may be communicatively coupled to the scooter motion tracking unit 112 via a wired communication protocol, e.g., a USB cable. In another embodiment, the CI 114 may be a touch-screen interface provided on the two-wheeled vehicle. In another embodiment, the CI 114 may include buttons provided on the scooter steering panel. In yet another embodiment, the CI 114 may be a website that can be accessed via the smart device of the rider or the touch-screen interface provided on the two-wheeled vehicle. In yet another embodiment, the CI 114 may include a voice recognition module. More specifically, the CI 114 may be any programmable interface that can be used to communicate with the different units of the system 100, ample examples of which have been listed above.

The manoeuvre includes braking of the two-wheeled vehicle and turning of the two-wheeled vehicle (left turn and right turn). The braking of the two-wheeled vehicle, in accordance with one embodiment, may be detected via the brake control unit 120. In another embodiment, the braking of the two-wheeled vehicle may be detected by the change in speed of the two-wheeled vehicle. The tracking of the turning manoeuvre of the two-wheeled vehicle may be initiated subsequent to the detection of an upcoming turn on the predicted route displayed to the rider. As mentioned previously, the GPS module 116 may include a display or a voice interface associated therewith to present or convey the predicted route to the rider.

In one example, if the braking of the two-wheeled vehicle is detected at a predetermined distance from the upcoming turn, and the IMU sensors 118 detect a change in the position of the two-wheeled vehicle in correspondence to the upcoming turn, a start instance of the turning manoeuvre of the two-wheeled vehicle is detected. After the turning manoeuvre of the two-wheeled vehicle is complete, as detected by the GPS module 116 and the IMU sensors, an end instance of the turning manoeuvre is detected.

In another example, the upcoming turn may be detected by the GPS module 116 but the rider may not wish to take that turn along the predicted route because the rider may have a chore to do before reaching the destination, for which the rider may wish to take a slightly different part. In such a scenario, if the braking is not detected at a predetermined distance before the upcoming turn, the start instance of the turning manoeuvre is not detected. In such a scenario, the GPS module 116 may provide the user with an alternative route to the destination in line with the new route undertaken by the rider.

In one embodiment, the CI may also be configured to allow the rider to manually provide or manually cancel the trigger signal and end signal to the indication control unit 122. In yet another example, the upcoming turn may be detected by the GPS module 116; the reduction in speed or braking of the two-wheeled vehicle is also detected by the brake control unit 120; and the IMU sensors 118 also detect the change in the position of the two-wheeled vehicle in line with the upcoming turn, but the user may not wish to take the upcoming turn and manoeuvred the two-wheeled vehicle to just change the lanes for overtaking another vehicle. In such a scenario, accidental detection of a start instance of the turning manoeuvre may be cancelled by the rider via the CI 114.

The scooter motion tracking unit 112 includes a scooter manoeuvre detection machine learning module 112A configured to detect and store the start instance and the end instance of all the manoeuvres performed by the two-wheeled vehicle as manoeuvre detection training data. The scooter manoeuvre detection machine learning module 112A may also store the information associated with the manual override performed by the rider to cancel an accidental detection of the start instance of the turning manoeuvre. The database of the information acquired by the scooter manoeuvre detection machine learning module 112A allows the scooter motion tracking unit 112 to make an informed decision about the manoeuvre being performed by the two-wheeled vehicle is turning manoeuvre or simply changing lanes by detecting the start and end instances of the turning manoeuvre.

In accordance with one embodiment, the manoeuvre detection machine learning module 112A configured to learn or collect training data when a two-wheeled vehicle is driven by a specially appointed rider, who correctly uses all indications provided on the steering wheel panel of the two wheeled vehicle, and makes certain desired manoeuvres on the two-wheeled vehicles at different speeds, and the system associates the activation with the indicators of the sensors. Further, when the system is trained, it can be improved by disabling the indication signals corresponding to the incorrectly defined manoeuvre on the control panel. In yet another embodiment, the manoeuvre detection machine learning module 112A can be trained to understand changing lane scenarios too and for such scenario turn on indication for predefined short time period. In yet another embodiment, the rider profile can also store the riding style of the rider to better predict the upcoming manoeuvre. For example, how abruptly the change of lane or turn of the two-wheeled vehicle is made.

The system 100 further comprises an indication control unit 122, communicatively coupled to the scooter motion tracking unit 112, configured to receive a trigger signal corresponding to the start instance, and an end signal corresponding to the end instance from the scooter motion tracking unit 112 for controlling the operation of an LED indicator 124. The indication control unit 122 is also configured to receive the manual cancel commands from the CI 114 for cancelling any accidental activation of the LED indicators 124 or to trigger the activation of the LED indicators 124. The LED indicator 124, in accordance with one embodiment, may be located on at least one of on-board the two-wheeled vehicle, a helmet of the rider, a wearable apparel of the rider, and an accessory of the rider visible to oncoming and surrounding vehicle users. In one embodiment, the LED indicator 124 may be provided on a jacket or windcheater worn by the user. In one embodiment, the LED indicator 124 may be provided on an accessory of the rider, such as a backpack. The LED indicator 124, in accordance with one embodiment, may be an LED matrix configured to display arrows to indicate the left and right turns, and a square or a circle to indicate the braking.

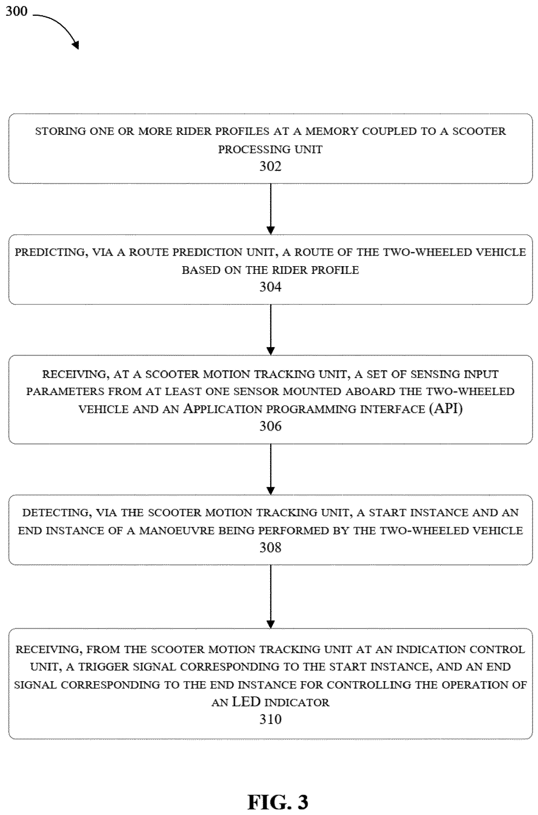

FIG. 3 illustrates a schematic block diagram depicting a method for displaying indications for two-wheeled vehicles, in accordance with an embodiment of the present subject matter. The order in which the method 300 is described is not intended to be construed as a limitation, and any number of the described method blocks can be combined in any order to implement the method or any alternative methods. Additionally, individual blocks may be deleted from the method without departing from the spirit and scope of the subject matter described herein. Furthermore, the method can be implemented in any suitable hardware, software, firmware, or combination thereof.

At block 302, the method 300 comprises storing one or more rider profiles at a memory 106 coupled to a scooter processing unit 102. As mentioned previously, the memory 106 may include a rider profile database 104 that includes information associated with one or more riders of the two-wheeled vehicle. The information may include rider's usual trip routes and trip times, in accordance with one embodiment. As mentioned previously, this information is storeed and compiled by the route prediction machine learning module 110.

At block 304, the method 300 includes predicting, via a route prediction unit 108, a route of the two-wheeled vehicle based on the rider profile. As mentioned previously, the information associated with the rider profile may include rider's usual trip routes and trip times, in accordance with one embodiment.

At block 306, the method 300 includes receiving, at a scooter motion tracking unit 112, a set of sensing input parameters from at least one sensor mounted aboard the two-wheeled vehicle and a Control interface (CI) 114. The at least one sensor, in accordance with an embodiment of the present subject matter, includes a GPS module 116, IMU sensors 118, and brake control unit 120. The route predicted by the route prediction unit 108 is displayed via a display or voice interface associated with the GPS module 116, in accordance with an embodiment of the present subject matter.

At block 308, the method 300 includes detecting, via the scooter motion tracking unit 112, a start instance and an end instance of a manoeuvre being performed by the two-wheeled vehicle. In one embodiment, the manoeuvre includes braking and turning the two-wheeled vehicle.

At block 310, the method 300 includes receiving, from the scooter motion tracking unit 112 at an indication control unit 122, a trigger signal corresponding to the start instance, and an end signal corresponding to the end instance for controlling the operation of an LED indicator 124. As mentioned previously, the LED indicator 124 may be provided on a jacket or windcheater worn by the user. In one embodiment, the LED indicator 124 may be provided on an accessory of the rider, such as a backpack. The LED indicator 124, in accordance with one embodiment, may be an LED matrix configured to display arrows to indicate the left and right turns, and a square or a circle to indicate the braking.

In a non-limiting alternative embodiment, the method 300 further comprises allowing, via the CI 114, the rider to manually provide information associated with a trip route to the scooter motion tracking unit 112. In such a scenario, the rider can provide the destination details via the CI 114, and the same is displayed via a display or voice interface associated with the GPS module 116 of the two-wheeled vehicle. The GPS module 116 also facilitates the tracking and sensing of location of the two-wheeled vehicles, and as such detect the various turns along the displayed route.

In a non-limiting alternative embodiment, the method 300 further comprises allowing, via the CI 114, the rider to manually provide or manually cancel the trigger signal and end signal to the indication control unit 122. As mentioned in the previous section, such a feature allows the user to manually cancel or turn off a turn indication if there is a certain chore that the user needs to do before reaching the destination. Similarly, the user can manually activate a turn indication via the CI 114.

In a non-limiting alternative embodiment, the method 300 further comprises initiating tracking of the at least one sensor subsequent to a detection of an upcoming turn in the predicted route. Such a step or feature of the method 300 may be executed on aforementioned system 100. In some cases, the two-wheeled vehicle may be an electric scooter. In such a scenario, the battery resources need to conserved to increase the driving range of the electric scooter. In such a case, the GPS module 116, the IMU sensors 118, and the brake control unit 120 need not be continuously tracked.

In one implementation, the GPS module 116 may be configured to be activated intermittently, wherein the activation is separated by a certain predetermined time period, e.g., 5-30 seconds. Once an upcoming turn is detected via the GPS module 116, then the tracking of the IMU sensors 118 may be initiated. And once the IMU sensors 118 indicate that the orientation of the electric scooter is changing in line with the upcoming turn, then the tracking of the brake control unit 120 may be initiated. Such a sequence of operation of the GPS module 116, the IMU sensors 118, and the brake control unit 120 result in optimal usage of the vehicle battery. Other such sequences for operation of the sensors for facilitating optimal utilisation of the battery of the two-wheeled vehicle are well within the ambit of the present subject matter.

In a non-limiting alternative embodiment, the method further comprises controlling intensity of the LED indicators based on ambient light conditions. For example, in cloudy and foggy weather conditions, the intensity of the LED indicators may be configured to be maximum. Similarly, at night, the LED indicators may be easily visible from a safe distance, so the LED indicators may not need to be operated at maximum light intensity.

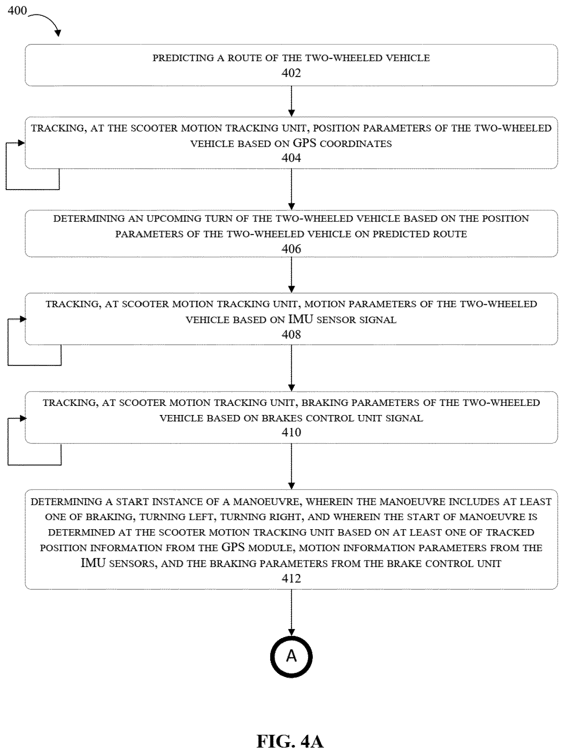

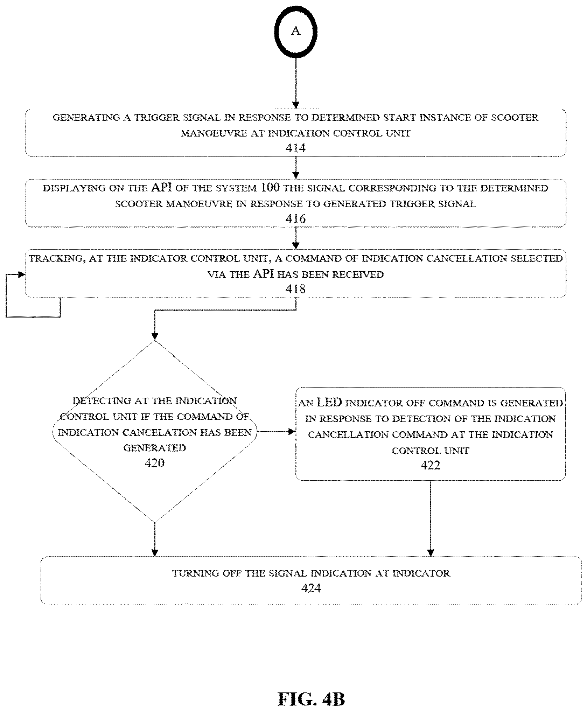

FIG. 4A and FIG. 4B illustrate a schematic block diagram depicting an exemplary implementation for displaying indications for two-wheeled vehicles, in accordance with an embodiment of the present subject matter. At block 402, the implementation 400 comprises predicting a route of the two-wheeled vehicle. The mechanism involved in prediction of the route via the route prediction unit 108 has been described in the previous sections of the present disclosure.

At block 404, the implementation 400 comprises tracking, at the scooter motion tracking unit 112, position parameters of the two-wheeled vehicle based on GPS coordinates. The GPS coordinates are provided by the GPS module 116, in accordance with one embodiment of the present subject matter.

At block 406, the implementation 400 comprises determining an upcoming turn of the two-wheeled vehicle based on the position parameters of the two-wheeled vehicle on predicted route. The same is facilitated by the GPS module 116, in accordance with one embodiment of the present subject matter.

At block 408, the implementation 400 comprises tracking, at scooter motion tracking unit 112, motion parameters of the two-wheeled vehicle based on IMU sensor signal. The IMU sensors 118 detect a change in orientation of the two-wheeled vehicle, in accordance with an embodiment of the present subject matter.

At block 410, the implementation 400 comprises tracking, at scooter motion tracking unit 112, braking parameters of the two-wheeled vehicle based on brakes control unit signal. The brake control unit 120 detects the actuation of brakes and reduction in speed of the two-wheeled vehicle.

At block 412, the implementation 400 comprises determining a start instance of a manoeuvre, wherein the manoeuvre includes at least one of braking, turning left, turning right, and wherein the start of manoeuvre is determined at the scooter motion tracking unit 112 based on at least one of tracked position information from the GPS module 116, motion information parameters from the IMU sensors, and the braking parameters from the brake control unit 120.

At block 414, the implementation 400 comprises generating a trigger signal in response to determined start instance of scooter manoeuvre at indication control unit 122.

At block 416, the implementation 400 comprises displaying on the CI 114 of the system 100 the signal corresponding to the determined scooter manoeuvre in response to the generated trigger signal.

At block 418, the implementation 400 comprises tracking, at the indicator control unit 122, a command of indication cancellation selected via the CI 114 has been received.

At block 420, the implementation 400 comprises detecting at the indication control unit 122 if the command of indication cancelation has been generated. If yes, the implementation proceeds to block 422, where an LED indicator off command is generated in response to detection of the indication cancellation command at the indication control unit 122. If no, the implementation 400 proceeds to block 424 for determining the end of a scooter manoeuvre, wherein the end of manoeuvre is determined on the scooter motion tracking unit based on at least one of tracked position information from the GPS module 116, motion information parameters from the IMU sensors, and the braking parameters from the brake control unit 120.

At block 426, the implementation 400 comprises turning off the signal indication at indicator. The cycle of aforementioned steps repeats from block 406 to block 426 till the rider reaches the destination while travelling on the predicted route.

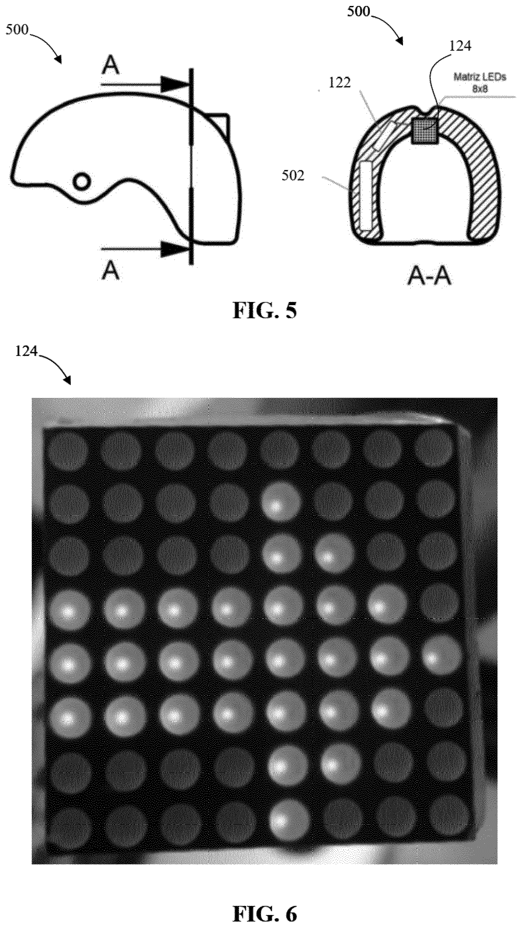

FIG. 5 and FIG. 6 depict schematic diagrams of a helmet 500 including an LED indicator 124 used in the system 100, in accordance with an embodiment of the present subject matter. As seen in FIG. 5 and FIG. 6, the helmet 500 includes a battery 502 for powering the indication control unit 122 used for controlling the LED indicator 124. In one embodiment, the indication control unit 122 may be an ESP32 microcontroller, and the LED indicator 124 may be an LED matrix, as seen in FIG. 6.

While this specification contains many specific implementation details, these should not be construed as limitations on the scope of any inventions or of what may be claimed, but rather as descriptions of features specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A system for displaying indications for two-wheeled vehicles, the system comprising:
a scooter processing unit;
a rider profile database to store one or more rider profiles at a memory coupled to the scooter processing unit;
a route prediction unit, configured to predict a route of the two-wheeled vehicle based on the rider profile, includes a route prediction machine learning module configured to store instances associated with the one or more rider profiles based on a set of trip parameters as route prediction training data;
a scooter motion tracking unit configured to receive a set of sensing input parameters from at least one sensor mounted aboard the two-wheeled vehicle and a Control interface (CI), and detecting a start instance and an end instance of a manoeuvre being performed by the two-wheeled vehicle, wherein the scooter motion tracking unit includes a scooter manoeuvre detection machine learning module configured to store the start instance and the end instance of the manoeuvres as manoeuvre detection training data; and
an indication control unit, communicatively coupled to the scooter motion tracking unit, configured to receive a trigger signal corresponding to the start instance, and an end signal corresponding to the end instance for controlling the operation of an LED indicator.

2. The system according to claim 1, wherein the set of sensing input parameters include input signal transmissions of input information associated with the CI, and the at least one sensor, wherein the at least one sensor includes a GPS module, at least one IMU sensor mounted aboard the two-wheeled vehicle, and a brake control unit aboard the two-wheeled vehicle.

3. The system according to claim 1, wherein the set of trip parameters include information associated with day, time-period, and route taken for all trips conducted by a rider of the two-wheeled vehicle.

4. The system according to claim 1, wherein the manoeuvre includes braking of the two-wheeled vehicle and turning of the two-wheeled vehicle.

5. The system according to claim 1, wherein the LED indicator is located on at least one of on-board the two-wheeled vehicle, a helmet of the rider, a wearable apparel of the rider, and an accessory of the rider visible to oncoming and surrounding vehicle users.

6. The system according to claim 1, wherein the CI is configured to:
allow the rider to manually provide information associated with a trip route to the scooter motion tracking unit; and
allow the rider to manually provide or manually cancel the trigger signal and end signal to the indication control unit.

7. A method for displaying indications for two-wheeled vehicles, the method comprising:
storing one or more rider profiles at a memory coupled to a scooter processing unit;
predicting, via a route prediction unit, a route of the two-wheeled vehicle based on the rider profile;
receiving, at a scooter motion tracking unit, a set of sensing input parameters from at least one sensor mounted aboard the two-wheeled vehicle and a Control interface (CI);
detecting, via the scooter motion tracking unit, a start instance and an end instance of a manoeuvre being performed by the two-wheeled vehicle;
receiving, from the scooter motion tracking unit at an indication control unit, a trigger signal corresponding to the start instance, and an end signal corresponding to the end instance for controlling the operation of an LED indicator.

8. The method according to claim 7, further comprising store, via a route prediction machine learning module, instances associated with the one or more rider profiles based on a set of trip parameters as route prediction training data.

9. The method according to claim 7, further comprising storing, via a scooter manoeuvre detection machine learning module, the start instance and the end instance of the manoeuvres as manoeuvre detection training data.

10. The method according to claim 7, wherein the set of sensing input parameters include input signal transmissions of input information associated with the CI, and the at least one sensor, wherein the at least one sensor includes a GPS module, at least one IMU sensor mounted aboard the two-wheeled vehicle, and a brake control unit aboard the two-wheeled vehicle.

11. The method according to claim 7, wherein the set of trip parameters include information associated with day, time-period, and route taken for all trips conducted by a rider of the two-wheeled vehicle.

12. The method according to claim 7, wherein the manoeuvre includes braking of the two-wheeled vehicle and turning of the two-wheeled vehicle.

13. The method according to claim 7, wherein the LED indicator is located on at least one of on-board the two-wheeled vehicle, a helmet of the rider, a wearable apparel of the rider, and an accessory of the rider visible to oncoming and surrounding vehicle users.

14. The method according to claim 7, further comprising:
allowing, via the CI, the rider to manually provide information associated with a trip route to the scooter motion tracking unit; and
allowing, via the CI, the rider to manually provide or manually cancel the trigger signal and end signal to the indication control unit.

15. The method according to claim 10, further comprising initiating tracking of the at least one sensor subsequent to a detection of an upcoming turn in the predicted route.

16. The method according to claim 7, further comprising controlling intensity of the LED indicators based on ambient light conditions.
